# DEMANDE DE BREVET EUROPEEN

(11) **EP 2 042 362 A1**
(43) Date de publication de la demande: **01.04.2009**
(21) Numéro de dépôt: 08161675.7
(22) Date de dépôt: 01.08.2008
(51) Int. Cl.: B60J 7/04, B60J 7/043, B60J 7/047

(54) **Module de toit ouvrant multi-panneaux pour un véhicule automobile et véhicule automobile équipé d'un tel module**

(30) Priorité: 26.09.2007 FR 0757886
(71) Demandeur: PEUGEOT CITROËN AUTOMOBILES S.A., 78140 Vélizy Villacoublay (FR)
(72) Inventeur: Gilleron, Philippe, 92400, COURBEVOIE (FR); Jourdan, Dominique, 27700 HEUQUEVILLE (FR)
(74) Mandataire: Fernandez, Francis Lionel

(57) **Abrégé**

L'invention a pour but de proposer un module de toit ouvrant (1) multi-panneaux (204, 304, 404) pour un véhicule automobile comprenant:
- deux rails (10a, 10b) destinés à être fixés au toit du véhicule,
- au moins deux sous-modules (2, 3, 4), chacun comprenant un panneau (204, 304, 404) et des moyens de déplacement angulaire motorisés prévus pour déplacer angulairement ledit panneau (204, 304, 404), et
- pour chaque sous-module (2, 3, 4), des moyens de déplacement longitudinaux motorisés prévus pour déplacer ledit sous-module (2, 3, 4) le long desdits rails (10a, 10b).

## Description

La présente invention concerne un module de toit ouvrant multi-panneaux pour un véhicule automobile ainsi qu'un véhicule automobile équipé d'un tel module.

Le document US-B-7,017,983 divulgue un module de toit ouvrant multi-panneaux pour un véhicule automobile. Le module comprend deux panneaux qui sont mobiles longitudinalement par rapport au véhicule et qui peuvent se manoeuvrer de manière pratiquement indépendante l'un par rapport à l'autre.

Bien qu'un tel module de toit ouvrant est adapté pour prendre de nombreuses positions, il ne permet pas que chaque panneau soit manoeuvré de manière totalement indépendante par rapport aux panneaux voisins aussi bien en inclinaison qu'en positionnement longitudinal.

L'invention a pour but de remédier aux inconvénients mentionnés ci-dessus en proposant un module de toit ouvrant multi-panneaux dans lequel chaque panneau peut être orienté angulairement et déplacé de manière indépendante par rapport aux panneaux voisins.

A cet effet, la présente invention concerne un module de toit ouvrant multi-panneaux pour un véhicule automobile comprenant:
- deux rails destinés à être fixés au toit du véhicule,
- au moins deux sous-modules, chacun comprenant un panneau et des moyens de déplacement angulaire motorisés prévus pour déplacer angulairement ledit panneau, et
- pour chaque sous-module, des moyens de déplacement longitudinaux motorisés prévus pour déplacer ledit sous-module le long desdits rails.

Avantageusement, chaque sous-module comprend deux chariots solidaires, chacun coopérant avec l'un des rails, et les moyens de déplacement angulaire comprennent un cadre support sur lequel le panneau est fixé et qui est mobile en rotation autour d'un axe par rapport auxdits chariots.

Avantageusement, le moteur desdits moyens de déplacement angulaire est embarqué sur ledit sous-module.

Avantageusement, les moyens de déplacement angulaire comprennent, pour chaque chariot, un jeu de biellettes disposé entre le chariot et le cadre support, et activé par le moteur desdits moyens de déplacement angulaire.

Avantageusement, pour chaque chariot, les moyens de déplacement longitudinaux comprennent un câble d'entraînement fixé à une languette dudit chariot et qui court le long du rail jusqu'au moteur desdits moyens de déplacement longitudinaux.

Avantageusement, chaque câble d'entraînement est inséré dans un premier conduit réalisé dans le rail correspondant.

Avantageusement, chaque moteur desdits moyens de déplacement angulaire est alimenté par un câble d'alimentation inséré dans un deuxième conduit réalisé dans l'un des rails correspondant.

Avantageusement, le deuxième conduit est disposé sous le premier conduit et communique par un canal avec ce dernier.

Avantageusement, le câble d'alimentation sort du rail en avant par rapport à la languette.

Avantageusement, les moyens de déplacement longitudinaux comprennent un enrouleur entraîné en rotation par le moteur desdits moyens de déplacement longitudinaux, et l'enrouleur comprend un pignon d'entraînement sur lequel chaque câble d'entraînement engrène de manière diamétralement opposée, et l'enrouleur comprend une rainure hélicoïdale dans laquelle le câble d'alimentation s'enroule.

Avantageusement, l'enrouleur comprend une joue à chacune des extrémités de la rainure hélicoïdale.

L'invention concerne également un véhicule automobile comprenant un toit auquel est fixé un module de toit ouvrant multi-panneaux selon l'une des variantes précédentes.

L'invention sera mieux comprise, et d'autres buts, caractéristiques, détails et avantages de celle-ci apparaîtront plus clairement au cours de la description explicative qui va suivre, faite en référence aux dessins schématiques annexés, donnés uniquement à titre d'exemple illustrant un mode de réalisation de l'invention et dans lesquels :
- la figure 1 représente un module de toit ouvrant multi-panneaux selon l'invention,
- la figure 2 représente une vue selon la flèche II de la figure 1 d'un détail du module de toit ouvrant,
- la figure 3 représente une vue de côté des moyens de déplacement angulaire d'un panneau,
- la figure 4 représente un détail des moyens de déplacement longitudinaux d'un panneau, et
- la figure 5 représente une coupe selon la ligne V-V de la figure 3.

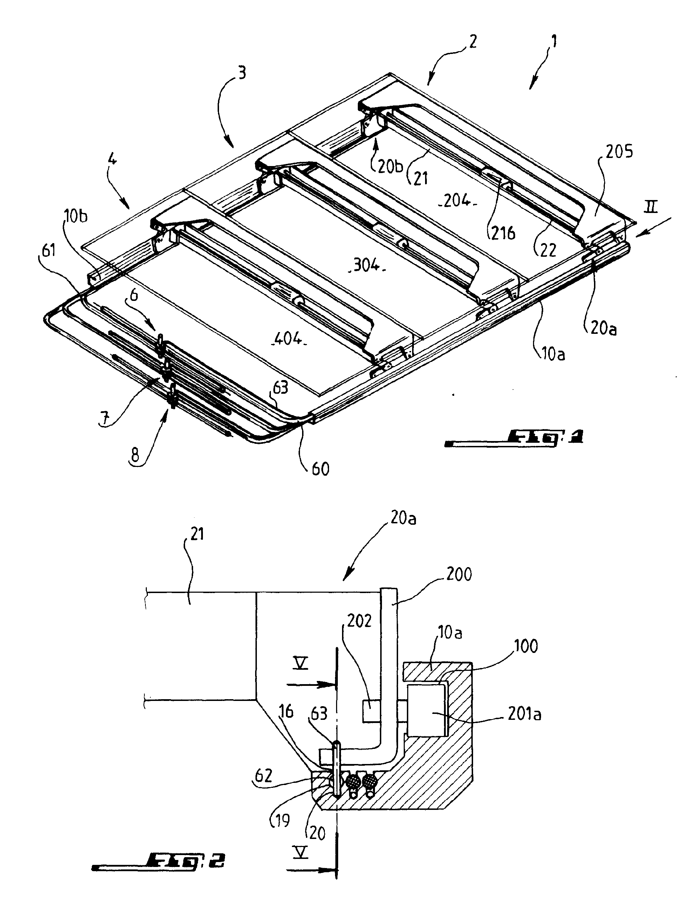

La figure 1 représente un module de toit ouvrant 1 multi-panneaux 204, 304 et 404 pour un véhicule automobile. Le module 1 comprend trois sous-modules 2, 3 et 4 comprenant chacun un panneau 204, 304, 404. Chaque sous-module 2, 3, 4 comprend des moyens de déplacement angulaire motorisés prévus pour permettre le déplacement angulaire du panneau 204, 304, 404 qu'il porte.

Le module de toit 1 comprend également un rail droit 10a et un rail gauche 10b qui sont fixés au toit du véhicule. La figure 2 montre que chaque rail 10a, 10b présente une rainure de guidage 100 qui s'étend le long du rail 10a, 10b.

Le module de toit 1 comprend également, pour chaque sous-module 2, 3, 4, des moyens de déplacement longitudinaux motorisés 6, 7 et 8 permettant de déplacer longitudinalement ledit sous-module 2, 3, 4 par rapport au véhicule, le long des rails 10a et 10b.

Chaque sous-module 2, 3, 4 comprend le moteur 216, dit "premier moteur", des moyens de déplacement angulaire, permettant ainsi un réglage angulaire personnalisé de chaque panneau 204, 304, 404, et chaque sous-module 2, 3, 4 peut être déplacé longitudinalement de manière indépendante par rapport aux autres sous-modules du fait du moteur, dit "deuxième moteur", de chacun des moyens de déplacement longitudinaux 6, 7 et 8.

Les sous-modules 2, 3 et 4 ont une structure identique et seul le sous-module 2 qui est situé le plus à l'avant du véhicule va être décrit. Le sous-module 2 comprend un chariot droit 20a, un chariot gauche 20b, une traverse 21, un cadre support 205 et le panneau 204 fixé par exemple par collage sur le cadre support 205.

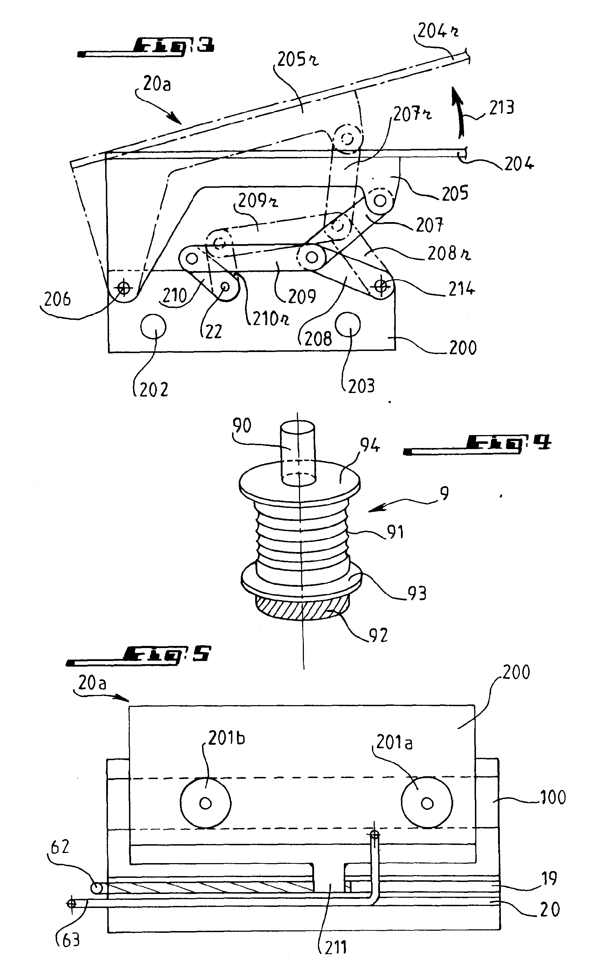

Les deux chariots 20a et 20b sont rigidement liés à la traverse 21 formant ainsi un ensemble rigide. Le chariot droit 20a se déplace le long du rail droit 10a et le chariot gauche 20b se déplace le long du rail gauche 10b. A cette fin, chaque chariot 20a, 20b comprend un corps 200, ici en forme de L, et deux galets 201a et 201b (figure 5) qui, d'une part, sont montés chacun sur un arbre 202, 203 (figure 3) fixé sur ledit corps 200 et, qui, d'autre part, roulent dans la rainure de guidage 100 du rail 10a, 10b correspondant.

La figure 3 montre que le cadre support 205 est fixé à chaque chariot 20a, 20b par l'intermédiaire d'un jeu de biellettes mis en mouvement par un arbre 22 qui est lui-même mis en mouvement par le premier moteur 216 embarqué et fixé dans la traverse 21. L'arbre 22 traverse la traverse 21 et est lié à chaque jeu de biellettes. Les moyens de déplacement angulaire comprennent le cadre support 205 et le jeu de biellettes de chaque chariot 20a et 20b.

Le jeu de biellettes qui va maintenant être décrit, représente un mode de réalisation particulier et permet l'orientation angulaire du cadre support 205 et donc du panneau 204. La figure 3 montre le panneau 204 dans sa position rabattue en traits pleins et dans sa position relevée en traits mixtes. Le panneau porte alors la référence 204r. Chaque élément mobile porte une référence numérique dans la position rabattue et la même référence numérique avec l'indice 'r' dans la position relevée. Le cadre support 205 est monté sur chaque corps 200 du sous-module 2 et est libre en rotation autour d'un axe 206 situé à l'avant des chariots 20a et 20b. Le relèvement du panneau 204 s'effectue par rotation du cadre support 205 autour de l'axe 206 et est représenté par la flèche 213. Une première biellette 210 comprend une première extrémité solidaire de l'arbre 22 et sensiblement au milieu du corps 200. Une deuxième biellette 208 comprend une première extrémité montée libre en rotation autour d'un axe 214 à l'arrière du corps 200. Une troisième biellette 209 a sa première extrémité reliée avec la deuxième extrémité de la première biellette 210 et sa deuxième extrémité reliée avec la deuxième extrémité de la deuxième biellette 208. Une quatrième biellette 207 a sa première extrémité reliée avec la deuxième extrémité de la troisième biellette 209 et la deuxième extrémité de la deuxième biellette 208, et sa deuxième extrémité reliée avec le cadre support 205. La rotation de l'arbre 22 entraîne le soulèvement de l'ensemble des biellettes 210r, 208r, 209r, 207r et du panneau 204r.

Pour que chaque panneau 204, 304, 404 puisse se déplacer longitudinalement, chaque sous-module 2, 3, 4 coopère avec les moyens de déplacement longitudinaux 6, 7 et 8. Les moyens de déplacement longitudinaux 6, 7 et 8 de chaque sous-module 2, 3, 4.

Les moyens de déplacement longitudinaux 6, 7 et 8 ont une structure identique et seuls les moyens de déplacement longitudinaux 6 du sous-module 2 vont être décrits. Les moyens de déplacement longitudinaux 6 comprennent le deuxième moteur et, pour chaque chariot 20a, 20b, un câble d'entraînement 62 semi-rigide qui peut agir en traction ou en compression. Chaque câble d'entraînement 62 court le long du rail 10a, 10b correspondant du chariot 20a, 20b au deuxième moteur des moyens de déplacement longitudinaux 6 correspondants. Le câble d'entraînement 62 est inséré dans un premier conduit 19 du rail 10a correspondant. Sa première extrémité est fixée au chariot 20a par l'intermédiaire d'une languette 211 du chariot 20a comme le montre la figure 4. Le premier conduit 19 présente une ouverture 16 vers le haut de manière à permettre le passage de la languette 211 issue du corps 200.

En dehors du conduit 19, chaque câble d'entraînement 62 est inséré dans une gaine 60, 61 rigide en compression et en extension. L'extrémité libre de chaque gaine 60, 61 d'un même sous-module 2 débouche au niveau d'un enrouleur 9 des moyens de déplacement longitudinaux 6 et représenté sur la figure 4.

L'enrouleur 9 de forme cylindrique est entraîné en rotation par le deuxième moteur par l'intermédiaire d'un axe 90. L'enrouleur comprend un pignon d'entraînement 92 sur lequel chaque câble d'entraînement 62 vient engrener de manière diamétralement opposée. Ainsi, la rotation dans un sens de l'enrouleur 9 va tirer sur les deux câbles d'entraînement 62, et dans l'autre sens, l'enrouleur 9 va pousser les deux câbles d'entraînement 62.

Pour alimenter le premier moteur 216, un câble d'alimentation 63 est inséré dans un deuxième conduit 20 de l'un des deux rails, ici le rail 10a. Le deuxième conduit 20 est disposé sous le premier conduit 19 et communique par un canal avec ce dernier. Le câble d'alimentation 63 est fixé au chariot 20a, traverse le canal et suit le deuxième conduit 20 pour parvenir jusqu'à l'enrouleur 9 car le câble d'alimentation 63 suit les mêmes courses que le câble d'entraînement 62. Le câble d'alimentation 63 s'enroule sur l'enrouleur 9 autour d'une rainure hélicoïdale 91 de l'enrouleur 9. La rainure hélicoïdale 91 permet l'enroulement du câble d'alimentation 63 tout en conservant un diamètre identique à celui du pignon d'entraînement 92 puisque la vitesse de déplacement est identique pour les deux câbles 62 et 63. Ainsi, lorsque le chariot 20a est tiré par le câble d'entraînement 62, le câble d'alimentation 63 s'enroule sur la rainure hélicoïdale 91, et lorsque le chariot 20a est repoussé par le câble d'entraînement 62, le câble d'alimentation 63 se déroule de la rainure hélicoïdale 91. Ainsi, le câble d'alimentation 63 reste toujours pratiquement tendu et ne vient pas encombrer les conduits 19 et 20.

Pour que le câble d'alimentation 63 ne déborde pas de la rainure hélicoïdale 91, une joue 93, 94 est disposée à chacune des extrémités de la rainure hélicoïdale 91.

Le câble d'alimentation 63 sort du deuxième conduit 20 en avant par rapport à la languette 211.

Le développé doit être similaire entre le câble d'alimentation 63 et le câble d'entraînement 62.

Chacun des deux autres sous-modules 3 et 4 comprend également des câbles d'entraînement et un câble d'alimentation qui sont disposés dans des conduits superposés. Les conduits des différents sous-modules 2, 3 et 4 sont ici disposés les uns à côté des autres dans les rails 10a et 10b.

Ainsi dés qu'un panneau 204, 304, 404 est relevé, il peut être déplacé longitudinalement le long du toit du véhicule. Ces deux mouvements peuvent être effectués quelque soit la position des autres panneaux, dans les limites d'encombrement des autres panneaux, en particulier si ces derniers sont en position rabattue ou en position relevée. A cette fin, des capteurs de positions permettront la localisation de chacun des sous-modules 2, 3 et 4 afin d'en assurer la bonne gestion.

La manoeuvre de chaque panneau 204, 304, 404 est activée par des boutons de commande disposés au niveau des passagers. Un boîtier général de commande disposé au niveau du conducteur peut commander l'ensemble des sous-modules 2, 3 et 4, tandis qu'un boîtier particulier de commande disposé au niveau de chaque passager peut commander uniquement certains de ces panneaux 2, 3 et4.

L'invention a été décrite pour trois panneaux 204, 304 et 404, mais elle s'applique en fait de la même manière pour au moins deux panneaux.

## Revendications

1. Module de toit ouvrant (1) multi-panneaux (204, 304, 404) pour un véhicule automobile, **caractérisé en ce qu'**il comprend:
- deux rails (10a, 10b) destinés à être fixés au toit du véhicule,
- au moins deux sous-modules (2, 3, 4), chacun comprenant un panneau (204, 304, 404) et des moyens de déplacement angulaire motorisés prévus pour déplacer angulairement ledit panneau (204, 304, 404),
- pour chaque sous-module (2, 3, 4), des moyens de déplacement longitudinaux motorisés prévus pour déplacer ledit sous-module (2, 3, 4) le long desdits rails (10a, 10b),
- chaque sous-module (2, 3, 4) comprend deux chariots (20a, 20b) solidaires, chacun coopérant avec l'un des rails (10a, 10b), et **en ce que** les moyens de déplacement angulaire comprennent un cadre support (205) sur lequel le panneau (204, 304, 404) est fixé et qui est mobile en rotation autour d'un axe (206) par rapport auxdits chariots (20a, 20b).

2. Module de toit (1) selon la revendication 1, **caractérisé en ce que** le moteur (216) desdits moyens de déplacement angulaire est embarqué sur ledit sous-module (2, 3, 4).

3. Module de toit (1) selon l'une des revendications 1 ou 2, **caractérisé en ce que** les moyens de déplacement angulaire comprennent, pour chaque chariot (20a, 20b), un jeu de biellettes disposé entre le chariot (20a, 20b) et le cadre support (205), et activé par le moteur (216) desdits moyens de déplacement angulaire.

4. Module de toit (1) selon l'une des revendications 1 à 3, **caractérisé en ce que**, pour chaque chariot (20a, 20b), les moyens de déplacement longitudinaux comprennent un câble d'entraînement (62) fixé à une languette (211) dudit chariot (20a, 20b) et qui court le long du rail (10a, 10b) jusqu'au moteur desdits moyens de déplacement longitudinaux.

5. Module de toit (1) selon la revendication 4, **caractérisé en ce que** chaque câble d'entraînement (62) est inséré dans un premier conduit (19) réalisé dans le rail correspondant (10a, 10b).

6. Module de toit (1) selon l'une des revendications 1 à 5, **caractérisé en ce que** chaque moteur (216) desdits moyens de déplacement angulaire est alimenté par un câble d'alimentation (63) inséré dans un deuxième conduit (20) réalisé dans l'un des rails correspondant (10a, 10b).

7. Module de toit (1) selon la revendication 6 et la revendication 6, **caractérisé en ce que** le deuxième conduit (20) est disposé sous le premier conduit (19) et communique par un canal avec ce dernier.

8. Module de toit (1) selon la revendication 7, **caractérisé en ce que** le câble d'alimentation (63) sort du rail (10a, 10b) en avant par rapport à la languette (211).

9. Module de toit (1) selon l'une des revendications 7 ou 8, **caractérisé en ce que** les moyens de déplacement longitudinaux comprennent un enrouleur (9) entraîné en rotation par le moteur desdits moyens de déplacement longitudinaux, et **en ce que** l'enrouleur (9) comprend un pignon d'entraînement (92) sur lequel chaque câble d'entraînement (62) engrène de manière diamétralement opposée, et **en ce que** l'enrouleur (9) comprend une rainure hélicoïdale (91) dans laquelle le câble d'alimentation (63) s'enroule.

10. Module de toit (1) selon la revendication 9, **caractérisé en ce que** l'enrouleur (9) comprend une joue (93, 94) à chacune des extrémités de la rainure hélicoïdale (91).

11. Véhicule automobile comprenant un toit auquel est fixé un module de toit ouvrant (1) multi-panneaux (204, 304, 404) selon l'une des revendications 1 à 10.
